# EUROPEAN PATENT SPECIFICATION

(11) **EP 2 113 321 B1**
(45) Date of publication and mention of the grant of the patent: **13.07.2011**
(21) Application number: 09250918.1
(22) Date of filing: 28.03.2009
(51) Int. Cl.: B22F 7/06, F01D 5/34

(54) **Manufacture of an article by hot isostatic pressing**
Herstellung eines Artikels durch heiß-isostatisches Pressen
Fabrication d'un article par compression isostatique à chaud

(30) Priority: 29.04.2008 GB 0807703
(43) Date of publication of application: 04.11.2009
(73) Proprietor: Rolls-Royce plc, London SW1E 6AT (GB)
(72) Inventor: Wu, Xinhua, Birmingham B31 2BE (GB); Mei, Junfa, Birmingham B31 2BE (GB); Wain, Nicholas, Worcester Worcestershire WR3 8EY (GB); Voice, Wayne Eric, Nottingham NG2 5JB (GB)
(74) Representative: Barcock, Ruth Anita

(56) References cited:
- EP-A1- 1 702 709
- US-A1- 2007 272 350

## Description

This invention relates to the manufacture of an article by hot isostatic pressing (HIP), and is particularly, although not exclusively, concerned with the manufacture of a component of a gas turbine engine such as a bladed disc or "blisk".

It is common for bladed rotors of gas turbine engines to be assembled from a disc and individual blades which are separately fitted to the disc and secured by mechanical fixings. More recently, the disc and blades have been formed integrally with one another, the resulting components being referred to as "blisks".

One method of manufacturing a component such as a blisk is disclosed in EP1702709A. In the process disclosed in that document the connection between each of the blades and the disc is established by a union piece which is formed by hot isostatic pressing of a powder, such as a titanium alloy. The powder is formed into a respective preform for each blade and the preform is set on the disc in the appropriate position and receives the blade. When all blades have been assembled on the disc with their union pieces, tooling pieces are fitted between adjacent blades, to contact the union pieces. The union pieces are thus situated in cavities defined by the disc, the blades and the union pieces.

To perform the hot isostatic pressing operation, the assembly is heated to a pressing temperature between 920 and 930°C in an inert gas environment (for example, argon) at a pressing pressure between 100 and 150MPa. The combined effect of the temperature and pressure is to force the pressing pieces radially inwardly of the assembly to consolidate the powder of the union piece preforms so that they form fully dense union pieces with "wrought" properties. At the same time, the union pieces are connected by diffusion bonds to the surface of the disc and to the blades.

The shape of each union piece over its surface extending from the respective blade to the disc is formed by the shape of respective tooling pieces on each side of the blade. The tooling pieces are made from steel, and may be coated, for example with a ceramic coating such as boron nitride, to prevent adherence between the tooling pieces and the union piece so that the tooling pieces can be re-used.

In the process disclosed in EP1702709A, the hot isostatic pressing process is performed by placing the assembly in an oven which is then filled with the inert gas. The pressure and temperature in the oven are raised simultaneously to the required pressing temperature and pressure referred to above, and the assembly is then maintained at those conditions for a prolonged period, such as about 4 hours.

In many applications of hot isostatic pressing processes, particularly those used for the manufacture of blisks, the material of the powder is much harder at ambient temperatures than the steel from which the tooling pieces are made. Consequently, elevation of the pressure while the temperature remains relatively low causes the tooling pieces to be pressed with great force against the union piece preform (or loose powder if the cavities are filled with loose powder instead of preforms), which deforms the surface of the tooling pieces so that they receive impressions of the individual particles of the powder.

This can result in a poor finish on the union pieces, and also damage the surface quality of the tooling piece for future forming operations.

According to the present invention there is provided a method according to claim 1 of manufacturing an article by hot isostatic pressing of a powder in which method the temperature of the powder is raised to a pressing temperature and a pressing pressure is applied to the powder by a tooling piece, characterised in that the pressure applied to the powder is maintained below the yield stress of the material of the tool piece until the temperature of the powder is greater than a predetermined temperature.

according to the method, the powder is of a first material and the tooling piece is of a second material, the powder material being harder at ambient temperature than the tooling piece material. The relative hardness of the tooling piece material and powder material varies with temperature. The hardness of the tooling piece material and powder material are equal at the said predetermined temperature, which is greater than ambient. The hardness of the tooling piece material may be greater than the powder material at the pressing temperature.

The pressing temperature is typically greater than or equal to the predetermined temperature such that the powder is softer than the tooling material upon pressing. The pressing pressure may be greater than the yield stress of the powder material but less than the yield stress of the tooling material at the pressing temperature.

By the "hardness" of a material, in the context of the present invention, is meant the stress at which plastic deformation of the material occurs.

The powder may be formed of, or consist of, a metallic material, for example a titanium alloy. The tooling piece may be made from, or consist of, a metallic material, for example steel. The tooling piece may comprise a steel body provided with a ceramic coating, for example of boron nitride.

In some embodiments of the present invention, for example when a titanium alloy powder is subjected to a hot isostatic pressing operation using a steel tooling piece, the predetermined temperature is greater than 400°C. The predetermined temperature may be within 100°C of the pressing temperature, and may be approximately equal to the pressing temperature.

In a particular method in accordance with the present invention, the temperature of the powder may be raised from ambient to the pressing temperature over a first time period, the applied pressure may be raised from a holding pressure to the pressing pressure over a second time period which begins when the temperature has reached the predetermined temperature, and the pressing temperature and pressing pressure may be maintained for a third time period from the end of the second time period. In a particular embodiment, the first time period may be not less than 2.5 and not more than 3.5 hours, for example 3 hours, the second time period may be not less than 1.5 hours and not more than 2.5 hours, for example 2 hours, and the third time period may be not less than 2.5 hours and not more than 3.5 hours, for example 3 hours.

By "ambient temperature" is meant the temperature of the ambient atmosphere around the equipment in which the hot isostatic pressing operation takes place. By "holding pressure" is meant an initial pressure to which the powder, or a preform made from the powder, is subjected by the tooling piece before the assembly is subjected to the increased temperature and pressure.

In general, the holding pressure is sufficient to maintain the components of the assembly (for example a disc, an array of blades, and preforms formed from the powder) in their correct relationships with each other, but lower than that required to cause any significant compaction of the powder. Thus, application of the holding pressure is not considered to be initiation of the application of the pressing pressure.

In one application of the method in accordance of the present invention, the article is a bladed disc for a gas turbine engine.

For a better understanding of the present invention, and to show more clearly how it may be carried into effect, reference will now be made by way of example, to the accompanying drawings, in which:
Figure 1 shows a schematic cross section of a bladed disc arrangement for manufacture in accordance with the present invention;
Figure 2 shows a schematic cross section of the bladed disc and tooling during manufacture;
Figure 3 is a graph of stress plotted against strain for a titanium alloy (Ti-6-4) against mild steel at ambient temperature;
Figure 4 corresponds to Figure 3 but represents stress plotted against strain at 800°C;
Figure 5 is a graph plotting temperature in °C and pressure in bar against time for a known hot isostatic pressing process;
Figure 6 corresponds to Figure 3 but represents a process in accordance with the present invention;
Figure 7 is a photo-micrograph of the interface between a compacted titanium alloy powder and a tooling piece following completion of a known hot isotatic pressing process; and
Figure 8 corresponds to Figure 5, but represents the condition of the components following completion of a hot isostatic pressing process in accordance with the present invention.

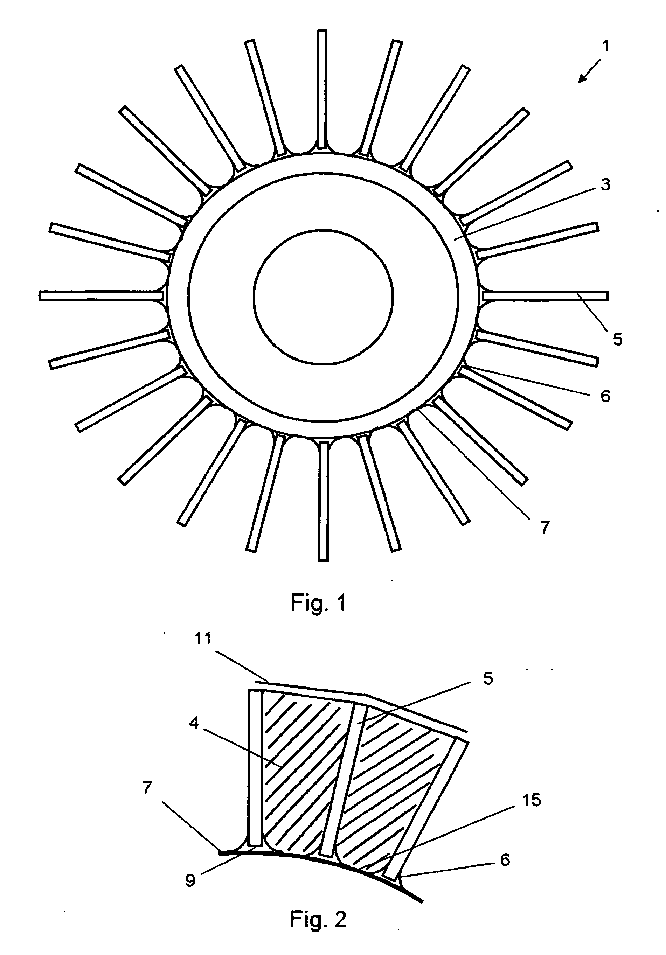

Turning to Figure 1, a compressor blisk 1 comprises a central workpiece, cylindrical disc 3, manufactured from a titanium alloy forging. A number of second workpieces, aerofoil blades 5 forged from the same titanium alloy, are attached to the disc 3, distributed evenly about the radially outer surface 7 of the disc and projecting radially therefrom. Each blade 5 is attached to the disc 3 via a union piece 6, consolidated from a powdered titanium alloy, in the present case Ti6/4, with particle sizes, before consolidation, of about 250 micron or less. Each union piece 6 provides a blended, radiussed fillet joint between the disc 3 and each blade 5.

In the present example, this joint has a mean radius of about 5mm. The union piece 6 extends around the entire blade section and each union piece 6 comprises a piece of titanium alloy with similar properties to a forged item of the same material, the base of which defines a lower surface which conforms with the outer surface 7 of the disc 3, and defines a footprint of similar shape to the compressor blade 5 cross-section but of larger area, by at least 100%. The union 6 tapers upwards and inwards from this footprint to a height of about 5mm from the base, at which height it blends with the external gas-washed surface of the aerofoil 5, with minimal step. The taper is shaped to form the radiussed fillet joint between each blade 5 and the disc 3. Such joints serve to reduce stresses at the blade/disc interface.

The union material 6 is centrally relieved to provide a blind socket which forms a close-fitting location feature to receive the blade 5, which is diffusion bonded to the union 6. During manufacture, the base of each blade is diffusion bonded to the socket base and the blade gas-washed surfaces are diffusion bonded to the socket sidewalls. The base of the union piece 6 is diffusion bonded to the disc surface 7.

Figure 2 shows a cross section through part of a blisk assembly used in the manufacture of the blisk 1. The titanium alloy powder which provides the union material is supplied to cavity 9 formed between each blade 5 and the disc 3. Tooling pieces 4 are inserted into the region between adjacent blades 5 and form a close fit therewith. The assembly is enclosed within a mild steel surround 11.

Each tooling piece 4 comprises a block of mild steel, provided with a boron nitride coating, which occupies substantially the whole volume between adjacent blades 5. With the tooling pieces 4 in place, the assembly forms a substantially solid disc with outer diameter equal to the blade tip diameter.

Each tooling piece has faces shaped to closely conform to the surface of an adjacent blade 5. Accordingly, the tooling piece comprises a convex blade engagement surface and an opposing a concave blade engagement surface, those surfaces being shaped to conform to respective pressure and suction surfaces of the adjacent blades.

The opposing side faces of each tooling piece 4 are tapered to form a wedge which narrows in the direction of the disc surface 7. The radially inner surface 15 of this wedge is truncated and relieved to provide one or more forging surfaces shaped to conform to the opposing fillet joints of the adjacent blades 5 and the region of the disc surface 7 which lies between the blade fillet joints. The tooling pieces 4 are pressed radially inwards during formation of the blisk to apply the desired shape to the union pieces 6.

In a preferred embodiment of the present invention, the metal powder for the union 6 is supplied as a 'partially-consolidated' preform, with solid-like properties, but with a material density of typically about 67%. The preform is shaped to define a socket which facilitates location of the preform about the base of the corresponding blade 5.

The mild steel surround 11 comprises a drum-like structure which fully encloses the assembly therein and which wraps around, and abuts the blade tips and outer surfaces of the tooling pieces 4. The surround 11 is evacuated prior to sealing about the components of the blisk assembly.

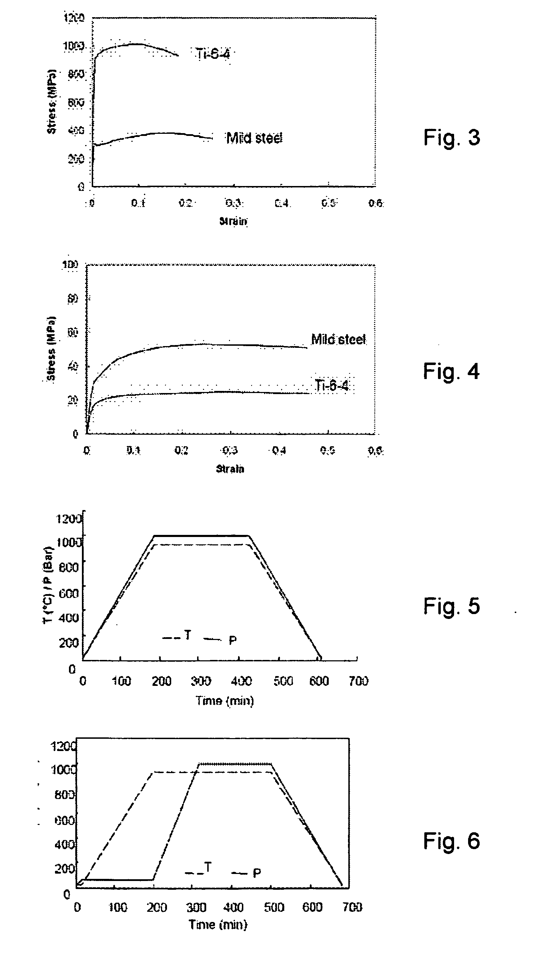

It will be appreciated from Figures 3 and 4 that, at ambient temperature, titanium alloy, and particularly Ti-6-4, is substantially harder than mild steel. The elastic limit of mild steel is reached at approximately 300MPa, while that for Ti-6-4 is reached at approximately 900MPa. As shown in figure 4, it has been discovered that the position is reversed at 800°C, with the elastic limit for Ti-6-4 being reached below 20MPa, while that for mild steel is reached at approximately 30MPa.

In a known hot isostatic pressing process, the sequence of operation is shown in Figure 5. For convenience of illustration, a single y-axis scale is shown, so that the same scale can represent both the temperature in °C and the pressure in bar.

Figure 5 relates to the manufacture of a bladed disc for a gas turbine engine. It will be appreciated that from time 0 (ie the time at which the assembled disc, union piece, preforms and blades) are placed in an oven, that both the temperature and pressure begin to rise immediately as power is supplied to the heating means of the oven and inert gas (such as argon) is admitted to the oven and pressurised, both by means of a pump and by means of the increasing temperature. The temperature rises to approximately 930°C over a period of approximately 3 hours, and the pressure rises to 100MPa (100 bar) over the same time period. When the pressure and temperature reach these pressing values, they are maintained for 4 hours, following which heating is terminated and the temperature and pressure are allowed to return to the ambient values.

In the early stages of the process, the pressure increases significantly while the temperature rises from the ambient level to the level at which the hardnesses of Ti-6-4 and mild steel become equal (i.e. a condition between the two conditions represented in Figures 3 and 4). The predetermined temperature at which this happens will vary with the precise composition of the titanium alloy and the mild steel, but in many cases will fall in the range 400 to 500°C.

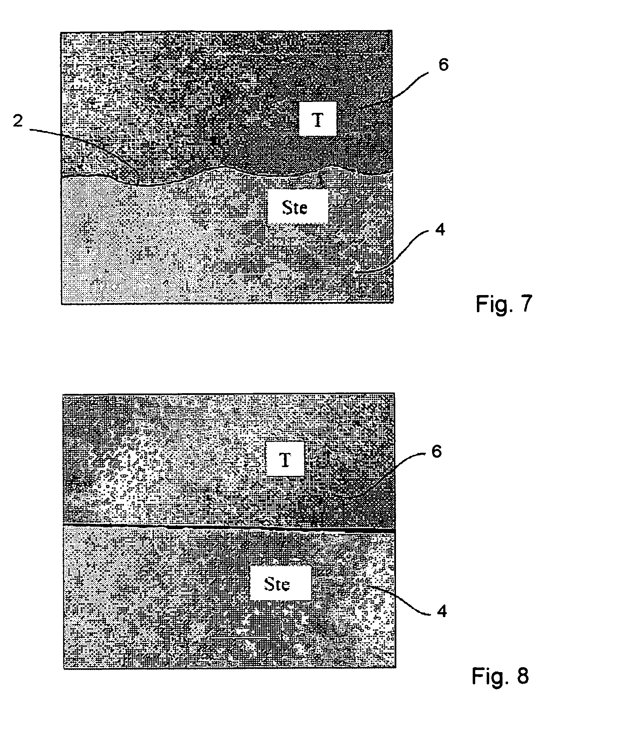

The result of this is that the titanium alloy powder and the steel are subjected to substantial pressures, of the order of 40 to 50MPa (400 to 500 bar) while the titanium alloy is harder than the mild steel. Consequently, the mild steel of the tooling pieces 4 is deformed, under the applied pressure, by the particles of the titanium alloy. This gives rise to an interface between the two materials as shown in Figure 7, in which indentations 2 in the tooling piece 4 can be seen, which are formed by individual particles of the titanium alloy powder of the union piece 6.

The consequence of this is, firstly, that the compacted titanium alloy union piece 6 at the end of the pressing operation does not have a smooth surface finish, with the result that a finishing operation may be required to eliminate surface roughness. Secondly, the surface of the steel cooling piece is deformed from its initial smooth configuration to the rough, indented configuration shown in Figure 7. Consequently, the surface of the tooling piece 4 is degraded, possibly making it unsuitable for re-use in a subsequent hot isostatic pressing operation. If the tooling piece has a ceramic coating, the indenting of the surface can cause cracking of the coating

Figure 6 corresponds to Figure 5, but represents a hot isostatic pressing operation in accordance with the present invention. In the process Figure 6, the temperature is increased, as before, to 930°C over a first time period of three hours. However, unlike the process represented in Figure 5, the increase in pressure is deferred until the temperature has reached the pressing temperature of 930°C. Instead, a relatively low holding pressure of the order of 5MPa is maintained in the oven as the temperature is raised.

At the end of the first time period, ie when the pressing temperature of 930°C is reached, the pressure is increased to the pressing pressure of 100MPa over a second time period of approximately two hours. As will be appreciated from Figure 4, the steel tooling pieces will be harder at the pressing temperature than the titanium alloy of the powder. As the pressure rises, it is the particles of the titanium alloy powder that are deformed by contact with the steel tooling pieces 4, so that the steel tooling pieces maintain their surface smoothness and the same smoothness is imparted to the surfaces of the union pieces. Consequently, as shown in Figure 8, the interface between the compacted titanium powder and the steel tooling piece 4 is smooth, by comparison with the roughened interface shown in Figure 7.

The pressing temperature and pressure are maintained for a third time period of 3 hours from the end of the second time period (ie when the pressing pressure has been reached), in order to complete compaction of the titanium alloy powder. At the end of the third time period, the temperature and pressure are returned to ambient in the same manner as for the known process presented in Figure 5.

The resulting surface of the union piece 6 formed from the titanium alloy powder, as shown in Figure 8, means that the surface definition and surface quality of the union piece 6 is improved over that achieved with the known process. Consequently, the union piece 6 does not need subsequent processing prior to use, and the process can be regarded as a true net-shape process which achieves the desired finish surface directly from the hot isostatic pressing operation. The use of a ceramic coating on the steel tooling piece 4 assists with the removal of the tooling piece 4 from the formed titanium powder union piece 6 or other component, and prevents any reaction, or undesired bonding, between the titanium alloy and the tooling piece 4.

It will be appreciated from Figures 3 and 4 that the increase in pressure need not be deferred until the increase in temperature to the pressing temperature of 930°C is complete. Instead, the second time period during which the pressure is increased can begin earlier, provided that the pressure applied to the powder remains below the yield stress of the material of the tooling piece until a temperature has been reached at which the hardness of the material of the tooling piece 4 (for example steel) is at or above the hardness of the material of the powder, (for example titanium alloy). Preferably, until that temperature is reached, the applied pressure is kept at an appropriate level blow the yield stress of the tooling piece material to take account of the higher temperature of the tool as heating progresses, and to take account of stress concentrations at the surface of the tooling piece as a result of uneven contact between the tooling piece and the powder in the early stages of pressure application.

By increasing the pressure at a controlled rate as the temperature rises, it is possible to maintain contact between the tooling and the powder to ensure consistent compression of the powder, without the formation of voids which can occur if the powder should sinter and consolidate lower in the mould cavity.

While the invention has been described with reference to a titanium alloy powder and mild steel tooling pieces, it will be appreciated that the present invention can be applied to hot isostatic pressing processes involving different materials, provided that the relative hardnesses of the materials invert with increasing temperature, as discussed with reference to Figures 3 and 4.

## Claims

1. A method of manufacturing an article by hot isostatic pressing of a powder (6) using a tooling piece (4), wherein the powder comprises a first material and the tooling piece comprises a second material, the powder material being harder at ambient temperature than the tooling piece material, the method comprising:
raising the temperature of the powder (6) to a pressing temperature; and,
applying a pressing pressure to the powder (6) by the tooling piece (4),
**characterised in that** the relative hardness of the first and second materials varies with temperature and
the pressure applied to the powder (6) is maintained below the yield stress of the second material until the temperature of the powder (6) is greater than a predetermined temperature at which the hardness of the two materials is equal.

2. A method as claimed in claim 1, wherein the pressing temperature is greater than the predetermined temperature such that the first material is softer than the second material upon pressing.

3. A method as claimed in claim 1 or 2, **characterised in that** the powder (6) comprises a metallic material.

4. A method as claimed in claim 3, **characterised in that** the powder comprises a titanium alloy.

5. A method as claimed in any one of the preceding claims, **characterised in that** the tooling piece (4) comprises a metallic material.

6. A method as claimed in claim 5, **characterised in that** the tooling piece (4) comprises steel.

7. A method as claimed in claim 5 or 6, **characterised in that** the tooling piece (4) comprises a steel body provided with a ceramic coating.

8. A method as claimed in any one of the preceding claims, **characterised in that** the predetermined temperature is greater than 400°C.

9. A method as claimed in claim 8, **characterised in that** the predetermined temperature is not less than 100C° lower than the pressing temperature.

10. A method as claimed in claim 9, **characterised in that** the predetermined temperature is approximately equal to the pressing temperature.

11. A method as claimed in any one of the preceding claims, **characterised in that** the temperature of the powder (6) is raised from ambient temperature to the pressing temperature over a first time period, the applied pressure is raised from a holding pressure to the pressing pressure over a second time period which begins when the temperature has reached the predetermined temperature, and the pressing temperature and pressing pressure are maintained for a third time period from the end of the second time period.

12. A method as claimed in claim 11, **characterised in that** the first time period is not less than 2.5 and not more than 3.5 hours.

13. A method as claimed in claim 11 or 12, **characterised in that** the second time period is not less than 1.5 hours and not more than 2.5 hours.

14. A method as claimed in any one of claims 11 to 13, **characterised in that** the third time period is not less than 2.5 hours and not more than 3.5 hours.

15. A method as claimed in any one of the preceding claims, **characterised in that** the article is a bladed disc for a gas turbine engine.

## Patentansprüche

1. Verfahren zum Herstellen eines Gegenstands durch isostatisches Heißpressen eines Pulvers (6) unter Verwendung eines Werkzeugstücks (4), wobei das Pulver aus einem ersten Material besteht und das Werkzeugstück aus einem zweiten Material besteht, und wobei das Pulvermaterial bei Umgebungstemperatur härter als das Werkzeugstückmaterial ist, wobei das Verfahren umfasst:
Anheben der Temperatur des Pulvers (6) auf eine Presstemperatur, und
Ausüben eines Pressdrucks auf das Pulver (6) durch das Werkzeugstück (4),
**dadurch gekennzeichnet, dass** die relative Härte des ersten Materials und des zweiten Materials mit der Temperatur sich verändert, und
der auf das Pulver (6) ausgeübte Druck unterhalb der Streckgrenze des zweiten Materials gehalten wird, bis die Temperatur des Pulvers (6) größer als eine vorgegebene Temperatur ist, bei welcher die Härte der beiden Materialien gleich ist.

2. Verfahren nach Anspruch 1, wobei die Presstemperatur größer als die vorgegebene Temperatur ist, so dass das erste Material weicher als das zweite Material auf das Pressen ist.

3. Verfahren nach Anspruch 1 oder 2, **dadurch gekennzeichnet, dass** das Pulver (6) ein metallisches Material ist.

4. Verfahren nach Anspruch 3, **dadurch gekennzeichnet, dass** das Pulver aus einer Titanlegierung besteht.

5. Verfahren nach einem der vorhergehenden Ansprüche, **dadurch gekennzeichnet, dass** das Werkzeugstück (4) aus einem metallischen Material besteht.

6. Verfahren nach Anspruch 5, **dadurch gekennzeichnet, dass** das Werkzeugstück (4) aus Stahl besteht.

7. Verfahren nach Anspruch 5 oder 6, **dadurch gekennzeichnet, dass** das Werkzeugstück (4) einen Stahlkörper umfasst, der mit einem keramischen Überzug versehen ist.

8. Verfahren nach einem der vorhergehenden Ansprüche, **dadurch gekennzeichnet, dass** die vorgegebene Temperatur größer als 400°C ist.

9. Verfahren nach Anspruch 8, **dadurch gekennzeichnet, dass** die vorgegebene Temperatur nicht weniger als 100°C niedriger als die Presstemperatur ist.

10. Verfahren nach Anspruch 9, **dadurch gekennzeichnet, dass** die vorgegebene Temperatur annähernd gleich der Presstemperatur ist.

11. Verfahren nach einem der vorhergehenden Ansprüche, **dadurch gekennzeichnet, dass** die Temperatur des Pulvers (6) über eine erste Zeitperiode von der Umgebungstemperatur auf die Presstemperatur angehoben wird, der ausgeübte Druck über eine zweite Zeitperiode, die beginnt, wenn die Temperatur die vorgegebene Temperatur erreicht hat, von einem Haltedruck auf den Pressdruck gesteigert wird, und die Presstemperatur und der Pressdruck während einer dritten Zeitperiode vom Ende der zweiten Zeitperiode an gehalten werden.

12. Verfahren nach Anspruch 11, **dadurch gekennzeichnet, dass** die erste Zeitperiode nicht weniger als 2,5 Stunden und nicht mehr als 3,5 Stunden beträgt.

13. Verfahren nach Anspruch 11 oder 12, **dadurch gekennzeichnet, dass** die zweite Zeitperiode nicht weniger als 1,5 Stunden und nicht mehr als 2,5 Stunden beträgt.

14. Verfahren nach einem der Ansprüche 11 bis 13, **dadurch gekennzeichnet, dass** die dritte Zeitperiode nicht weniger als 2,5 Stunden und nicht mehr als 3,5 Stunden beträgt.

15. Verfahren nach einem der vorhergehenden Ansprüche, **dadurch gekennzeichnet, dass** der Gegenstand eine beschaufelte Scheibe für ein Gasturbinentriebwerk ist.

## Revendications

1. Procédé pour fabriquer un article par compression isostatique à chaud d'une poudre (6) en utilisant une pièce d'usinage (4), dans lequel la poudre comprend un premier matériau et la pièce d'usinage comprend un deuxième matériau, le matériau de poudre étant plus dur à la température ambiante que le matériau de pièce d'usinage, le procédé comprenant les étapes consistant à:
augmenter la température de la poudre (6) jusqu'à la température de compression ; et
appliquer une pression de compression sur la poudre (6) par la pièce d'usinage (4),
**caractérisé en ce que** la dureté relative des premier et deuxième matériaux varie avec la température, et
la pression appliquée sur la poudre (6) est maintenue au-dessous de l'effort de tension du deuxième matériau jusqu'à ce que la température de la poudre (6) soit supérieure à une température prédéterminée à laquelle la dureté des deux matériaux est identique.

2. Procédé selon la revendication 1, dans lequel la température de compression est supérieure à la température prédéterminée de sorte que le premier matériau est plus souple que le deuxième matériau après compression.

3. Procédé selon la revendication 1 ou 2, **caractérisé en ce que** la poudre (6) comprend un matériau métallique.

4. Procédé selon la revendication 3, **caractérisé en ce que** la poudre comprend un alliage de titane.

5. Procédé selon l'une quelconque des revendications précédentes, **caractérisé en ce que** la pièce d'usinage (4) comprend un matériau métallique.

6. Procédé selon la revendication 5, **caractérisé en ce que** la pièce d'usinage (4) comprend de l'acier.

7. Procédé selon la revendication 5 ou 6, **caractérisé en ce que** la pièce d'usinage (4) comprend un corps en acier prévu avec un revêtement en céramique.

8. Procédé selon l'une quelconque des revendications précédentes, **caractérisé en ce que** la température prédéterminée est supérieure à 400°C.

9. Procédé selon la revendication 8, **caractérisé en ce que** la température prédéterminée n'est pas inférieure à 100°C au-dessous de la température de compression.

10. Procédé selon la revendication 9, **caractérisé en ce que** la température prédéterminée est approximativement égale à la température de compression.

11. Procédé selon l'une quelconque des revendications précédentes, **caractérisé en ce que** la température de la poudre (6) est augmentée à partir de la température ambiante jusqu'à la température de compression sur une première période de temps, la pression appliquée est augmentée à partir d'une pression de maintien jusqu'à la pression de compression sur une deuxième période de temps qui commence lorsque la température a atteint la température prédéterminée, et la température de compression et la pression de compression sont maintenues pendant une troisième période de temps à partir de la fin de la deuxième période de temps.

12. Procédé selon la revendication 11, **caractérisé en ce que** la première période de temps n'est pas inférieure à 2,5 et pas supérieure à 3,5 heures.

13. Procédé selon la revendication 11 ou 12, **caractérisé en ce que** la deuxième période de temps n'est pas inférieure à 1,5 heure et pas supérieure à 2,5 heures.

14. Procédé selon l'une quelconque des revendications 11 à 13, **caractérisé en ce que** la troisième période de temps n'est pas inférieure à 2,5 heures et pas supérieure à 3,5 heures.

15. Procédé selon l'une quelconque des revendications précédentes, **caractérisé en ce que** l'article est un disque à aubes pour un moteur de turbine à gaz.
